(19) Europäisches Patentamt
European Patent Office
Office européen des brevets

(11) **EP 3 388 944 A1**

(12) **EUROPÄISCHE PATENTANMELDUNG**

(43) Veröffentlichungstag:
**17.10.2018   Patentblatt 2018/42**

(51) Int Cl.:
***G06F 11/10*** *(2006.01)*

(21) Anmeldenummer: **17166581.3**

(22) Anmeldetag: **13.04.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **TTTech Computertechnik AG**
**1040 Wien (AT)**

(72) Erfinder:
• **POLEDNA, Stefan**
  **3400 Klosterneuburg (AT)**

• **KOPETZ, Hermann**
  **2500 Baden (AT)**
• **WOLF, Andreas**
  **2824 Seebenstein (AT)**
• **HÖFLER, Martin**
  **3420 Kritzendorf (AT)**

(74) Vertreter: **Patentanwaltskanzlei**
**Matschnig & Forsthuber OG**
**Biberstraße 22**
**Postfach 36**
**1010 Wien (AT)**

(54)   **VERFAHREN ZUR FEHLERERKENNUNG IN EINEM BETRIEBSSYSTEM**

(57)   Die Erfindung betrifft ein Verfahren zur Erkennung von in einem Betriebssystem eines Computers vorhandenen oder auftretenden Fehlern, wobei während der Laufzeit vor einem Startzeitpunkt (102, 112) eines angeforderten Anwendungstasks (107) ein, insbesondere *unabhängiger, Überprüfungstask* (106) ausgeführt wird, der auf Inhalte der von einem Berechnungs*task (105)* *des Betriebssystems* gesetzten Kontrollregister des Computers, die die Eigenschaften der Laufzeitumgebung des angeforderten Anwendungstasks (107) festlegen, lesend zugreift und diese Inhalte validiert. Außerdem betrifft die Erfindung einen Computer, auf dem ein solches Verfahren ausgeführt wird.

105   106   107

100

111   112   113

(b)

**FIG. 1**

EP 3 388 944 A1

**Beschreibung**

Die Erfindung betrifft ein Verfahren zur Erkennung von in einem Betriebssystem eines Computers vorhandenen oder auftretenden Fehlern.

Weiters betrifft die Erfindung einen Computer mit einem Betriebssystem.

Schließlich betrifft die Erfindung ein Computersystem, insbesondere eine verteiltes zeitgesteuertes Echtzeit-Computersystem, umfassend Knotenrechner, wobei einer oder mehrere Knotenrechner als erfindungsgemäße Computer ausgebildet sind.

Die Erfindung liegt im Bereich der Computertechnik. Sie betrifft ein Verfahren, das es ermöglicht, das Verhalten eines Betriebssystems während der Laufzeit zu überprüfen und fehlerhafte Ergebnisse zu erkennen. Diese fehlerhaften Ergebnisse des Betriebssystems können durch vorhandene Entwurfsfehler in der Software des Betriebssystems oder durch transiente Hardwarefehler während der Laufzeit des Betriebssystems verursacht werden.

Die Entwicklungen der Sensortechnik und der Computertechnik ermöglichen die weitgehend autonome Steuerung von technischen Objekten, wie z.B. Maschinen, die autonom arbeiten oder Fahrzeugen, welche autonom ein Ziel ansteuern. In diesen Echtzeit-Computeranwendungen ist eine schnelle Erkennung von Fehlern im Computersystem besonders gefordert, um nach Auftreten eines Fehlers das technische Objekt schnell in einen sicheren Zustand bringen zu können. In vielen technischen Objekten ist das sofortige Anhalten des Steuerungsprozesses nach Erkennung eines Fehlers *(Not-Aus)* eine Maßnahme, um das System in einen sicheren Zustand zu bringen.

In vielen Echtzeit Computeranwendungen kommen komplexe Betriebssysteme, wie z.B. LINUX zum Einsatz. Vieler dieser komplexen Betriebssysteme enthalten unerkannte Software-Fehler. So wird in [2] festgestellt, dass im weit verbreiteten Betriebssystem LINUX in der Version LINUX 3.0 855 Fehler identifiziert wurden. Mit dem im Rahmen der vorliegenden Erfindung vorgeschlagenen Verfahren können die Folgen einiger dieser Fehler gemildert werden.

Im Folgenden bezeichnen wir die Gesamtheit aller Programme, die das Betriebssystem beinhaltet, als *Betriebssystemsoftware.*

Wir bezeichnen die Gesamtheit aller Programme, die ein Anwendungssystem beinhaltet, als *Anwendungssoftware.*

Unter dem Begriff *Software* wird die Gesamtheit der *Betriebssystemsoftware* und der *Anwendungssoftware* verstanden.

Wir bezeichnen die Ausführung eines Programms (d.i. ein Softwareprozess) auf einer Maschine als einen Task.

Ein Task der Betriebssystemsoftware bzw. des Betriebssystems wird auch als *Betriebssystemtask* bezeichnet, ein Task der Anwendungssoftware bzw. des Anwendungssystems wird auch als *Anwendungstask* bezeichnet.

Wir modellieren das Verhalten eines Tasks (unabhängig davon ob es sich um einen Betriebssystemtask oder einen Anwendungstask handelt) durch einen endlichen Automaten und bezeichnen einen Task, er aus gegebenen Eingabedaten und einem alten Zustand ein neues Ergebnis und einen neuen Zustand berechnet, als *Berechnungstask.* Wir bezeichnen einen Task, der ein Ergebnis eines Berechnungstasks auf seine Richtigkeit überprüft, als *Überprüfungstask.*

Es entspricht dem Stand der Technik, dass *Kontrollsysteme* (das sind Systeme zur Echtzeit-Steuerung und/oder Regelung eines kontrollierten Objektes) periodisch ablaufen [1, S. 7]. Das kontrollierte Objekt wird zu periodischen *Beobachtungszeitpunkten* (*sampling points*) beobachtet. Die erfassten Daten bilden die Grundlage für eine schnellstmögliche Berechnung von neuen Sollwerten für Aktuatoren, die das Verhalten des kontrollierten Objektes beeinflussen.

Wir bezeichnen die sich periodisch wiederholende Ausführung einer Aufeinanderfolge von möglicherweise verteilten Berechnungen, die nach jeder Beobachtung durchgeführt werden müssen, als *Frame*.

In einem Frame können eine oder mehrere *Echtzeittransaktion* (RT-Transactions, siehe [1, S. 24]) ablaufen.

Die Folge von Betriebssystemtasks und Anwendungstasks (d.s. Softwareprozesse), die innerhalb einer RT Transaction abgearbeitet werden, wird in einem oder mehreren Datenflusspfaden (DFP) festgelegt.

Mit jedem Frame sind zwei Zeitparameter verbunden:

Die *Ausführungsdauer* (oder auch *Antwortzeit* genannt) gibt das Zeitintervall zwischen dem *sampling point* und der *Ausgabe der Ergebnisse des Frames* an Aktuatoren des kontrollierten Objekts an. Je kürzer die Ausführungsdauer eines Frames ist, desto besser ist die Güte eines Kontrollsystems.

Das *Frame-Intervall* gibt den zeitlichen Abstand zwischen zwei aufeinanderfolgende Frames an.

Die Anzahl der Frames, die pro Sekunde abgearbeitet werden, wird oft in Herz (Hz) ausgedrückt.

Die Ursache für das Auftreten eines Fehlers in einem Frame kann ein Alterungsfehler (physical fault) der Computer-Hardware oder ein vorhandener Entwurfsfehler (design fault) in der Computer-Hardware oder der Software sein.

Ein Alterungsfehler liegt vor, wenn eine Baueinheit, die zu Beginn ihrer Lebenszeit voll funktionstüchtig war, auf Grund von Alterungsprozessen der Hardware oder von physikalischen Umwelteinflüssen (z.B. kosmische Strahlung) ausfällt. Bei *state of the art chips* ist die Fehlerrate für permanente Alterungsfehler <100 FIT.

Die Fehlerrate von transienten Hardwarefehlern ist wesentlich höher als die Fehlerrate von permanenten Hardwarefehlern [1, S. 155]. In vielen Fällen sind die betrieblichen Auswirkungen eines transienten Hardwarefehlers von einem *Heisenbug* [1, S. 138] in der Software nicht zu unterscheiden.

Eine wesentliche Ursache für das Auftreten von Entwurfsfehlern in der Software liegt in der Komplexität der Software.

Maßnahmen, die zu einer Reduktion der Wahrscheinlichkeit für das Auftreten eines unentdeckten Entwurfsfehlers in der Software führen, sind ein systematischer Entwurfprozess, Verifikation und Validierung, und vor allem umfangreiches Testen der Software, sowohl *off-line* wie auch *on-line.*

Bei einem *on-line Test* werden während des Betriebes eines Computersystems bzw. Computers ausgewählte Zwischenergebnisse eines Tasks, insbesondere eines Berechnungstasks (der Betriebssystemsoftware oder der Anwendungssoftware) validiert, d.h. auf ihre Richtigkeit überprüft. Mit einem *on-line Test* können die Auswirkungen von *Entwurfsfehlern in der Software* (z.B. unerkannte *Heisenbugs*) und *transienten Hardwarefehlern* erkannt werden.

Es ist eine Aufgabe der Erfindung, fehlerhafte Ergebnisse von Betriebssystemtasks, nämlich von Berechnungstasks des Betriebssystems, während der Laufzeit zu erkennen. Diese fehlerhaften Ergebnisse können durch vorhandene Entwurfsfehler in der Software des Betriebssystems oder durch Alterungsfehler (permanente und transiente Hardwarefehler) während der Laufzeit des Betriebssystems verursacht werden.

Diese Aufgabe wird erfindungsgemäß dadurch gelöst, dass während der Laufzeit vor einem Startzeitpunkt eines angeforderten Anwendungstasks ein, insbesondere *unabhängiger, Überprüfungstask* ausgeführt wird, der auf Inhalte der von einem Berechnungst*ask des Betriebssystems* gesetzten Kontrollregister des Computers, die die Eigenschaften der Laufzeitumgebung des angeforderten Anwendungstasks festlegen, lesend zugreift und diese Inhalte validiert.

Erfindungsgemäß wird ein, insbesondere unabhängiger, Überprüfungstask ausgeführt, der die vom Betriebssystem bereitgestellten Ergebnisse überprüft, bevor mit der Ausführung eines Anwendungstasks begonnen wird.

Beispielsweise sind zwei Tasks sind voneinander unabhängig, wenn sie voneinander getrennt entwickelt und/oder getestet wurden.

Die vorliegende Erfindung basiert darauf, dass die Berechnung eines Ergebnisses in den meisten Fällen komplexer ist als die Überprüfung eines Ergebnisses. Die Wahrscheinlichkeit, dass während der Berechnung eines Ergebnisses ein Fehler auftritt, ist daher höher als die Wahrscheinlichkeit, dass während der Überprüfung eines Ergebnisses ein Fehler auftritt.

Zum Beispiel ist die Überprüfung ob eine Folge von Zahlen richtig sortiert ist, wesentlich einfacher als die Sortierung einer ungeordneten Folge von Zahlen.

Vorteilhafte Ausgestaltungen des erfindungsgemäßen Verfahrens, Computers und Computersystems sind im Folgenden beschrieben:

❯ der, insbesondere *unabhängige, Überprüfungstask* kann ein Teil der Betriebssystemsoftware sein; oder

❯ der, insbesondere *unabhängige, Überprüfungstask* kann ein Teil einer Anwendungssoftware ist;

❯ es kann vorgesehen sein, dass im Falle, dass die Validierung einen Fehler in einem Kontrollregister entdeckt hat, eine Notlaufaktion gestartet wird;

❯ es kann vorgesehen sein, im Falle, dass die Validierung einen Fehler in einem Frame entdeckt hat, auf den folgenden Frame gewartet wird, ehe eine Notlaufaktion gestartet wird;

❯ das Betriebssystem ist vorzugsweise ein zeitgesteuertes Betriebssystem und/oder ein Anwendungssystem ist beispielsweise ein zeitgesteuertes Anwendungssystem; in einem zeitgesteuerten Betriebssystem ist dabei vorzugsweise vorgesehen, dass der Berechnungst*ask des Betriebssystems* und der, insbesondere *unabhängige, Überprüfungstask* vor dem *a priori* bekannten Startzeitpunkt des Anwendungstasks ausgeführt werden.

Es hängt von der konkreten Aufgabenstellung ab, ob nach dem Erkennen eines Fehlers in einem Frame auf den folgenden Frame gewartet wird oder ob sofort eine Notlaufaktion gesetzt wird. Im Falle eines kontrollierten Objektes in Form eines autonomen Fahrzeugs kann das sofortige Anhalten des Fahrzeugs eine Notlaufaktion sein.

Erfindungsgemäß wird also vorgeschlagen, die Ergebnisse von Berechnungstasks eines umfangreichen Betriebssystem-wie z.B. LINUX-durch vorzugsweise unabhängige Überprüfungstasks zu validieren. Diese vorzugsweise unabhängigen Überprüfungstasks können Teil der Betriebssystemsoftware oder Teil der Anwendungssoftware sein, können also Tasks der Betriebssystemsoftware oder Tasks der Anwendungssoftware sein.

Wenn nach Auftreten eines anwendungsspezifischen Ereignisses (z.B. das Eintreffen einer Nachricht oder das Auftreten eines Interrupts) das Betriebssystem aufgefordert wird, einen Kontextwechsel zu einem durch das Ereignis angeforderten Anwendungstask vorzunehmen, so muss ein Berechnungstask des Betriebssystems vor dem *Startzeitpunkt* des Anwendungstasks die Inhalte der Kontroll-Register des Computers, die die *Eigenschaften der Laufzeitumgebung* des angeforderten Anwendungstasks festlegen, errechnen.

Die *Eigenschaften der Laufzeitumgebung* des angeforderten Anwendungstasks legen zumindest folgende Eigenschaften fest:

- welche Datenbereiche der Anwendungstask lesen darf,
- welche Datenbereiche der Anwendungstask beschreiben darf,
- welche Datenbereiche des Anwendungstasks von anderen im Betriebssystem aktiven Tasks gelesen bzw. beschrieben werden dürfen, und
- wie lange der Anwendungstask für seine Berechnungen brauchen darf.

Nach Beendigung des *Berechnungstasks des Betriebssystems* validiert erfindungsgemäß ein *Überprüfungstask* die Inhalte der Kontroll-Register des Computers.

Um zu verhindern, dass ein Fehler im Überprüfungstasks zu einer Veränderung der Inhalte der Kontroll-Register des Computers führt, darf der *Überprüfungstask* nur *lesend* auf die Inhalte der Kontroll-Register des Computers zugreifen.

Im Falle, dass die Validierung einen Fehler entdeckt hat kann sofort eine anwendungsabhängige Notlaufaktion veranlasst werden, z.B. *Stop der Anlage.*

Im Falle dass die Validierung einen Fehler in einem periodischen Frame entdeckt hat, kann auf den folgenden Frame gewartet werden, ehe eine Notlaufaktion gesetzt wird.

Die Kontroll-Register eines Computers sind validiert, wenn mindestens die folgenden Bedingungen erfüllt sind:

- Die Daten des Anwendungstasks sind vor nicht autorisiertem Zugriff durch andere Tasks geschützt.
- Die gesetzten Lese/Schreib Rechte zu den Daten im Computer-entsprechen der Spezifikation des Anwendungstasks.
- Die Adressen zu den Eingabe/Ausgabedaten entsprechen der Spezifikation des Anwendungstasks.
- Die vom Betriebssystem zu überwachenden Laufzeitvorgaben der Anwendungssoftware entsprechen der Spezifikation des Anwendungstasks.

Wir bezeichnen die *Dauer der Aktivitäten* des Betriebssystems, die im Rahmen eines Task-Wechsels vor dem Startzeitpunkt eines Anwendungstasks auszuführen sind, als *Administrative Overhead* [1, S. 245]. Der *Administrative Overhead* eines Task Wechsels ergibt sich aus der Summe der Ausführungsdauer des Berechnungstasks und der Ausführungsdauer des Überprüfungstasks.

Im Folgenden ist die Erfindung an Hand eines in der Zeichnungen gezeigten Ausführungsbeispiels beschrieben. In den Zeichnungen zeigt

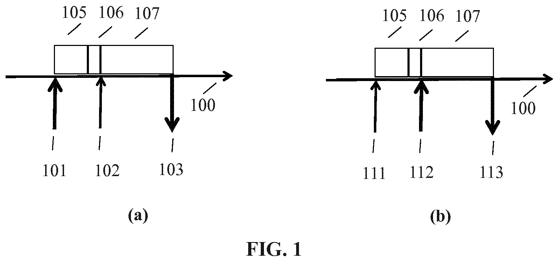

Fig. 1a die Abläufe von Betriebssystem- und Anwendungstasks in einem ereignisgesteuerten Betriebssystem eines Computers, und

Fig. 1b die Abläufe von Betriebssystem- und Anwendungstasks in einem zeitgesteuerten Betriebssystems eines Computers.

In Fig. 1a ist der zeitliche Ablauf eines Task-Wechsels in einem ereignisgesteuerten Betriebssystem eines Computers dargestellt. Die Abszisse 100 zeigt das Fortschreiten der Zeit. Beispielsweise tritt in einem ereignisgesteuerten Betriebssystem zu einem *a priori* nicht bekanntem Zeitpunkt 101 ein Ereignis auf, das einen Taskwechsel nach sich zieht. In dem Zeitintervall 105 berechnet das Betriebssystem des Computers die neuen Inhalte von Kontroll-Registern des Computers. Im Zeitintervall 106 validiert das Betriebssystem die Register-Inhalte. Zum Zeitpunkt 102, dem Startzeitpunkt eines geforderten Anwendungstasks, beginnt der Anwendungstask zu rechnen. Nach der Dauer 107 des Anwendungstasks produziert der Anwendungstask seine Ergebnisse. Diese Ergebnisse können entweder an die Aktuatoren oder an einen im Frame nachfolgenden Task weitergeleitet werden. Dies geschieht zum Zeitpunkt 103.

In Fig. 1b ist der zeitliche Ablauf eines Taskwechsels in einem zeitgesteuerten Betriebssystem dargestellt. Die Abszisse 100 zeigt das Fortschreiten der Zeit. In einem zeitgesteuerten System ist *a priori* bekannt, dass zu einem *Startzeitpunkt 112* ein bestimmter Anwendungstask mit seiner Berechnung zu beginnen hat. Aufgrund dieses *a priori* Wissens kann das Betriebssystem schon zu einem Zeitpunkt 111 mit der Berechnung der neuen Inhalte der Kontroll-Register beginnen.

Nach Ende der Berechnung des Berechnungstasks des Betriebssystems mit der Dauer 105 validiert das Betriebssystem im anschließenden Intervall 106 die Inhalte der Kontrollregister mit einem Überprüfungstask. Diese Validierung ist zum Zeitpunkt 112, dem *a priori* bekannten Startzeitpunkt des neuen Anwendungstasks, abgeschlossen. Nach der Ausführungszeit 107 des Anwendungstasks produziert der Anwendungstask seine Ergebnisse. Diese Ergebnisse können entweder an die Aktuatoren oder an einen im Frame nachfolgenden Task weitergeleitet werden. Dies geschieht zum Zeitpunkt 113.

Der Zeitpunkt 111 ergibt sich aus:

$$\text{Zeitpunkt 111} = \text{Zeitpunkt 112} - (\text{Dauer 105 Berechnungstasks des Betriebssystems} + \text{Dauer 106 Überprüfungstask})$$

Im Vergleich zu einem ereignisgesteuerten *ET-Betriebssystem,* wo sich die für die Funktion der Anwendung wichtige *Ausführungsdauer-ET* zu

$$\textit{Ausführungsdauer-ET} = (\textit{Dauer 105 Berechnungstasks des Betriebssystems} + \textit{Dauer 106 Überprüfungstask} + \textit{Dauer 107 Anwendungstask})$$

ergibt, kann in einem *zeitgesteuerten (TT-)Betriebssystem* durch das *a priori* Wissen des Startzeitpunkts des Anwendungstasks die Dauer der für die Funktion der Anwendung wichtige *Ausführungsdauer-TT* auf

$$\textit{Ausführungsdauer-TT} = (\textit{Dauer 107 Anwendungstask})$$

reduziert werden.

Durch die Reduktion der Ausführungsdauern der Tasks innerhalbe eines Frames wird in einem zeitgesteuerten System die gesamte Ausführungsdauer der Frames reduziert, was zu einer Verbesserung der Güte eines Kontrollsystems führt.

Zitierte Literatur:

[1] Kopetz, H. Real-Time Systems, Design Principles for Distributed Embedded Applications. Springer Verlag. 2011.

[2] Palix, N. et al., Faults in LINUX 2.6. ACM Transactions on Computer Systems. Vol 32. No 2. pp. 4.1-4.41. June 2014

**Patentansprüche**

1. Verfahren zur Erkennung von in einem Betriebssystem eines Computers vorhandenen oder auftretenden Fehlern, **dadurch gekennzeichnet, dass**
   während der Laufzeit vor einem Startzeitpunkt (102, 112) eines angeforderten Anwendungstasks (107) ein, insbesondere *unabhängiger, Überprüfungstask* (106) ausgeführt wird, der auf Inhalte der von einem Berechnungs*task (105) des Betriebssystems* gesetzten Kontrollregister des Computers, die die Eigenschaften der Laufzeitumgebung des angeforderten Anwendungstasks (107) festlegen, lesend zugreift und diese Inhalte validiert.

2. Verfahren nach Anspruch 1, **dadurch gekennzeichnet, dass** der, insbesondere *unabhängige, Überprüfungstask (106)* ein Teil der Betriebssystemsoftware ist.

3. Verfahren nach Anspruch 1, **dadurch gekennzeichnet, dass** der, insbesondere *unabhängige, Überprüfungstask (106)* ein Teil einer Anwendungssoftware ist.

4. Verfahren nach einem der Ansprüche 1 bis 3, **dadurch gekennzeichnet, dass** im Falle, dass die Validierung einen Fehler in einem Kontrollregister entdeckt hat, eine Notlaufaktion gestartet wird.

5. Verfahren nach einem der Ansprüche 1 bis 4, **dadurch gekennzeichnet, dass** im Falle, dass die Validierung einen Fehler in einem Frame entdeckt hat, auf den folgenden Frame gewartet wird, ehe eine Notlaufaktion gestartet wird.

6. Verfahren nach einem der Ansprüche 1 bis 5, **dadurch gekennzeichnet, dass** das Betriebssystem ein zeitgesteuertes Betriebssystem und/oder ein Anwendungssystem ein zeitgesteuertes Anwendungssystem ist.

7. Verfahren nach Anspruch 6, **dadurch gekennzeichnet, dass** in einem zeitgesteuerten Betriebssystem der Berechnungst*ask (105) des Betriebssystems* und der, insbesondere *unabhängige, Überprüfungstask (106)* vor dem *a priori* bekannten Startzeitpunkt (112) des Anwendungstasks (107) ausgeführt werden.

8. Computer mit einem Betriebssystem,
   **dadurch gekennzeichnet, dass**
   zur Erkennung von in dem Betriebssystem des Computers vorhandenen oder auftretenden Fehlern der Computer dazu eingerichtet ist, während der Laufzeit vor einem Startzeitpunkt (102,112) eines angeforderten Anwendungstasks (107) einen, insbesondere *unabhängigen, Überprüfungstask* (106) auszuführen, der auf Inhalte der von einem Berechnungst*ask (105) des Betriebssystems* gesetzten Kontrollregister des Computers, die die Eigenschaften der Laufzeitumgebung des angeforderten Anwendungstasks (107) festlegen, lesend zugreift und diese Inhalte validiert.

9. Computer nach Anspruch 8, **dadurch gekennzeichnet, dass** der, insbesondere *unabhängige, Überprüfungstask (106)* ein Teil der Betriebssystemsoftware ist.

10. Computer nach Anspruch 8, **dadurch gekennzeichnet, dass** der, insbesondere *unabhängige, Überprüfungstask (106)* ein Teil einer Anwendungssoftware ist.

11. Computer nach einem der Ansprüche 8 bis 10, **dadurch gekennzeichnet, dass** im Falle, dass die Validierung einen Fehler in einem Kontrollregister entdeckt hat, eine Notlaufaktion gestartet wird.

12. Computer nach einem der Ansprüche 8 bis 11, **dadurch gekennzeichnet, dass** im Falle, dass die Validierung einen Fehler in einem Frame entdeckt hat, auf den folgenden Frame gewartet wird, ehe eine Notlaufaktion gestartet wird.

13. Computer nach einem der Ansprüche 8 bis 12, **dadurch gekennzeichnet, dass** das Betriebssystem ein zeitgesteuertes Betriebssystem und/oder ein Anwendungssystem ein zeitgesteuertes Anwendungssystem ist.

14. Computer nach Anspruch 13, **dadurch gekennzeichnet, dass** in einem zeitgesteuerten Betriebssystem der Berechnungst*ask (105) des Betriebssystems* und der, insbesondere *unabhängige, Überprüfungstask (106)* vor dem *a priori* bekannten Startzeitpunkt (112) des Anwendungstasks (107) ausgeführt werden.

15. Computersystem, insbesondere verteiltes zeitgesteuertes Echtzeit-Computersystem, umfassend Knotenrechner, **dadurch gekennzeichnet, dass** einer oder mehrere Knotenrechner als Computer nach einem der Ansprüche 8 bis 14 ausgebildet sind.

(a)                                                    (b)

FIG. 1

Europäisches
Patentamt

European
Patent Office

Office européen
des brevets

**EUROPÄISCHER RECHERCHENBERICHT**

Nummer der Anmeldung

EP 17 16 6581

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2013/124871 A1 (PARK SUNGHYUN [KR]) 16. Mai 2013 (2013-05-16) * Seite 1, Absatz 3-6 * * Seite 2, Absatz 22 - Seite 4, Absatz 43; Abbildungen 1,2,4 * ----- | 1-15 | INV. G06F11/10 |
| X | US 5 598 530 A (NAGAE TAKAAKI [JP]) 28. Januar 1997 (1997-01-28) * Spalte 3, Zeile 6 - Spalte 4, Zeile 65; Abbildungen 1,3 * * Seite 2, Absatz 21 - Absatz 25; Abbildungen 1,2 * ----- | 1-15 | |
| X | US 2003/188231 A1 (CRONCE PAUL A [US]) 2. Oktober 2003 (2003-10-02) * Seite 1, Absatz 6 * ----- | 1-15 | |

RECHERCHIERTE
SACHGEBIETE (IPC)

G06F

Der vorliegende Recherchenbericht wurde für alle Patentansprüche erstellt

| Recherchenort | Abschlußdatum der Recherche | Prüfer |
|---|---|---|
| München | 15. September 2017 | Bauer, Regine |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

    .................................................................................

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 16 6581

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-09-2017

| Im Recherchenbericht angeführtes Patentdokument | Datum der Veröffentlichung | Mitglied(er) der Patentfamilie | Datum der Veröffentlichung |
|---|---|---|---|
| US 2013124871 A1 | 16-05-2013 | KR 20130053179 A<br>US 2013124871 A1 | 23-05-2013<br>16-05-2013 |
| US 5598530 A | 28-01-1997 | JP H06242957 A<br>US 5598530 A | 02-09-1994<br>28-01-1997 |
| US 2003188231 A1 | 02-10-2003 | KEINE | |

EPO FORM P0461

Für nähere Einzelheiten zu diesem Anhang : siehe Amtsblatt des Europäischen Patentamts, Nr.12/82

**EP 3 388 944 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **KOPETZ, H.** Real-Time Systems, Design Principles for Distributed Embedded Applications. Springer Verlag, 2011

- **PALIX, N. et al.** Faults in LINUX 2.6. *ACM Transactions on Computer Systems.*, Juni 2014, vol. 32 (2), 4.1-4.41